(19) Europäisches Patentamt / European Patent Office / Office européen des brevets

(11) **EP 3 792 652 A1**

(12) **DEMANDE DE BREVET EUROPEEN**

(43) Date de publication:
17.03.2021 Bulletin 2021/11

(21) Numéro de dépôt: 20195598.6

(22) Date de dépôt: 10.09.2020

(51) Int Cl.:
*G01S 5/02* (2010.01) *G01S 5/14* (2006.01)
*G01S 13/87* (2006.01) *G01S 13/84* (2006.01)

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 13.09.2019 FR 1910164

(71) Demandeur: Commissariat à l'énergie atomique et aux énergies alternatives
75015 Paris (FR)

(72) Inventeurs:
• WOLF, Florian
38054 GRENOBLE CEDEX 09 (FR)
• DE RIVAZ, Sébastien
38054 GRENOBLE CEDEX 09 (FR)
• DEHMAS, François
38054 GRENOBLE CEDEX 09 (FR)
• SANA, Mohamed
38054 GRENOBLE CEDEX 09 (FR)

(74) Mandataire: Brevalex
56, Boulevard de l'Embouchure
B.P. 27519
31075 Toulouse Cedex 2 (FR)

(54) **MÉTHODE D'ESTIMATION DE DISTANCE DANS UN RÉSEAU LPWA ET MÉTHODE D'ESTIMATION DE POSITION ASSOCIÉE**

(57) La présente invention concerne une méthode d'estimation de distance entre nœuds d'un réseau LPWA. Un premier nœud (resp. un second nœud) émet successivement un signal à bande étroite à une pluralité de fréquences porteuses (421). Le second (resp. le premier) nœud reçoit les signaux émis et les démodule en bande de base (422). Des valeurs complexes représentatives d'une fonction aller-retour du canal de transmission entre les deux nœuds sont obtenues (423) à partir des signaux démodulés en bande de base. Ces valeurs complexes sont ensuite fournies à un réseau de neurones (425) préalablement entraîné de manière supervisée, le réseau de neurones donnant une estimation la distance séparant le premier nœud et le second nœud. La présente invention concerne également une méthode d'estimation de position d'un nœud dans un réseau LPWA utilisant ladite méthode d'estimation de distance.

Fig. 4

EP 3 792 652 A1

**Description**

**DOMAINE TECHNIQUE**

La présente invention concerne le domaine général des réseaux LPWA (*Low Power Wide Area*) à bande étroite tels que les réseaux LoRa, SigFox et NB-IoT. Il concerne également le domaine de l'apprentissage automatique et plus particulièrement celui de l'apprentissage profond (*deep learning*).

**ÉTAT DE LA TECHNIQUE ANTÉRIEURE**

La géolocalisation des objets connectés est devenue un enjeu important dans le domaine de l'IoT (*Internet of Things*). Elle permet notamment d'enrichir les informations transmises par ces objets par des informations de localisation, de gérer plus efficacement le réseau et de développer des applications de suivi géographique lorsque les objets sont mobiles.

Une première possibilité de géolocalisation consiste à équiper les objets connectés de modules de réception GNSS (*Global Navigation Satellite System*). Toutefois, cette option est coûteuse et n'est généralement pas compatible avec les contraintes de consommation énergétique très strictes de ces objets. En outre, elle est exclue lorsque les objets connectés sont déployés dans un environnement intérieur (*indoor*).

Une seconde possibilité de géolocalisation est d'effectuer une trilatération à partir des signaux radio émis par les objets connectés et reçus par différentes stations de base. Toutefois, les signaux émis dans les réseaux LPWA, qu'ils utilisent une bande licenciée (NB-IoT) ou non (SigFox, LoRa) sont à faible débit et bande étroite pour se propager sur de longues distances (jusqu'à plusieurs kilomètres). Le fait que les signaux radio émis soient à bande étroite conduit à une limitation inhérente importante de la résolution des temps d'arrivée (ToA) de ces signaux et donc à une faible résolution en distance de la position des objets connectés. Cette faible résolution temporelle peut notamment conduire à des erreurs de position importantes lorsque les canaux de transmission sont de type multi-trajet, dans la mesure où les différents trajets ne peuvent être discriminés.

Dans le domaine du radar, il est connu de mesurer une distance à une cible en utilisant une pluralité de signaux à bande étroite, de manière à ne pas recourir à des convertisseurs CANs de haute fréquence. Plus précisément, cette technique (connue sous le nom de *stepped frequency radar*), consiste à faire varier par sauts successifs la fréquence porteuse du signal émis tout en conservant une bande étroite instantanée, la réponse complexe étant alors mesurée pour chaque fréquence porteuse. En combinant de manière cohérente les mesures, plus précisément en effectuant une transformée de Fourier inverse des mesures ainsi obtenues, on obtient une réponse impulsionnelle du canal dans le domaine temporel. La résolution temporelle est alors inversement proportionnelle à la largeur de bande de fréquence virtuelle balayée et non plus proportionnelle à la largeur de bande instantanée. Une technique similaire, dénommée « *coherent multi-channel ranging* », a été appliquée dans des réseaux LR WPAN (Low Rate Wireless Personal Area Network) pour déterminer la position de transpondeurs ZigBee, comme décrit dans l'article de M. Pichler et al. intitulé « Multi-channel distance measurement with IEEE 802.15.4 (ZigBee) devices » publié dans IEEE Journal of Selected Topics in Signal Processing, Vol. 3, No. 5, Oct. 2009, pp. 845-859. Toutefois, l'article précité fait appel à des hypothèses restrictives fortes sur le scenario de propagation, à savoir une situation de vue directe (LOS) et l'absence de multi-trajet.

La détermination de distance multi-canal cohérente ne peut s'appliquer telle quelle aux réseaux LPWA. En effet, la bande de fréquence virtuelle balayée est soumise à des contraintes réglementaires dans la bande ISM (au plus 7MHz peuvent être utilisés dans la bande à 868 MHz), ce qui limite la résolution temporelle et ne permet pas une résolution satisfaisante des multi-trajets comme indiqué précédemment.

Les récentes avancées dans le domaine de l'apprentissage automatique ont ouvert de nouveaux horizons dans le domaine de la détermination de distance au sein des réseaux sans fil. En particulier, l'article de O. Bialer et al. intitulé « A deep neural network approach for time-of-arrival estimation in multipath channels » publié dans Proc. of ICASSP Conference, avril 2018, pages 2936-2940, a proposé d'utiliser un réseau de neurones artificiels pour déterminer le temps d'arrivée d'un signal OFDM à partir des échantillons du signal de préambule. Après apprentissage, le réseau de neurones permet d'obtenir une estimation correcte du temps d'arrivée même en présence d'une densité élevée de multi-trajets. Toutefois, si cette technique est satisfaisante pour des signaux OFDM, elle ne peut s'appliquer aux signaux à bande étroite tels que ceux émis dans les réseaux LPWA.

L'article de F. Wolf et al. intitulé « Coherent multi-channel ranging for narrowband LPWAN : simulation and expérimentation results » publié dans Proc. 2018 15th IEEE Workshop on positioning, navigation and communication, 25 Oct. 2018 mentionne la possibilité d'utiliser un réseau de neurones pour estimer une distance entre deux nœuds d'un réseau LPWA à partir des caractéristiques de la fonction de transfert pour une pluralité de canaux.

Un objet de la présente invention est par conséquent de proposer une méthode d'estimation de distance ou, de manière équivalente de temps de propagation dit encore temps de vol ou ToF (*Time of Flight*) entre nœuds d'un réseau LPWA, qui permette d'obtenir une meilleure résolution spatiale (resp. temporelle) que celle obtenue dans l'état de la technique, en particulier lorsque les canaux de transmission sont de type multi-trajet. Un objet subsidiaire de la présente invention est de proposer une méthode d'estimation de position d'un nœud d'un réseau LPWA utilisant ladite méthode d'estimation de distance.

## EXPOSÉ DE L'INVENTION

La présente invention est définie par une méthode d'estimation de distance telle que précisée dans la revendication 1. Des modes de réalisation avantageux sont donnés dans les revendications dépendantes 2-6.

La présente invention concerne également une méthode d'estimation de position d'un nœud d'intérêt dans un réseau LPWA utilisant ladite méthode d'estimation de distance.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique une mesure de phase de vol aller-retour entre deux nœuds d'un réseau LPWA ;

La Fig. 2 représente un exemple de balayage d'une bande virtuelle au cours du temps par un couple de nœuds de réseau LPWA ;

La Fig. 3 représente de manière schématique une méthode de mesure de distance entre nœuds d'un réseau LPWA utile à la compréhension de la présente invention ;

La Fig. 4 représente de manière schématique une méthode de mesure de distance entre nœuds d'un réseau LPWA utile à la compréhension de la présente invention ;

La Fig. 5 illustre les performances d'une méthode d'estimation de distance selon l'invention et d'une méthode d'estimation de distance connue de l'état de la technique ;

La Fig. 6 représente de manière schématique une première méthode d'estimation de la position d'un nœud de réseau LPWA utilisant une méthode d'estimation de distance selon la présente invention ;

La Fig. 7 représente de manière schématique une seconde méthode d'estimation de position d'un nœud de réseau LPWA utilisant une méthode d'estimation de distance selon la présente invention.

## EXPOSÉ DÉTAILLÉ DE MODES DE RÉALISATION PARTICULIERS

On considérera dans la suite un réseau LPWA (*Low Power Wide Area*) tel que présenté dans la partie introductive, par exemple un réseau LoRa, SigFox ou NB-IoT. Ces réseaux ont notamment pour caractéristique d'utiliser des signaux à bande étroite (typiquement d'une centaine de Hz à une centaine de kHz) et à bas débit pour permettre des communications de longue portée (typiquement d'un km à quelques dizaines de kms).

Les nœuds d'un réseau LPWA comprennent, d'une part, des objets connectés et, d'autre part, des stations de base. Un objet connecté servi par une station de base échange avec celle-ci des paquets de données sur un canal de transmission qui est généralement de type multi-trajet.

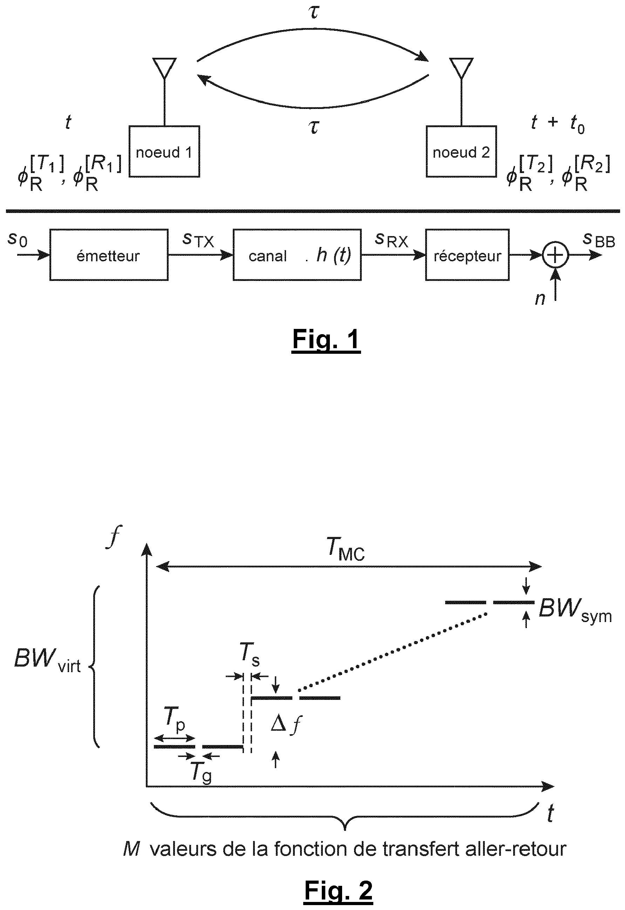

On a représenté en Fig. 1 deux nœuds 1, 2 d'un réseau LPWA (par exemple une station de base en 1 et un objet connecté en 2), chaque nœud étant équipé d'un émetteur/ récepteur radio (*radio transceiver*). Les deux nœuds communiquent via un canal de transmission de réponse impulsionnelle $h(t)$.

Le signal émis par un nœud est noté de manière générique par $s_{TX}(t)$ et peut s'exprimer sous la forme :

$$s_{TX}(t) = s_0\left(t_T(t)\right)e^{j\left(2\pi f_0 t_T(t) + \phi_T\right)} \tag{1}$$

$s_0$ est le signal en bande de base, $t_T(t)$ est le temps au niveau de l'émetteur qui diffère généralement du temps réel t en raison d'un défaut de synchronisation de l'horloge locale, $\phi_T$ est la phase à l'origine de la transmission, $f_0$ est la fréquence porteuse.

Le signal reçu par le nœud récepteur après transmission sur le canal est donné par :

$$s_{RX}(t) = s_{TX}(t) * h(t) \tag{2}$$

où le symbole * représente l'opération de convolution.

Le canal de transmission est supposé comporter P trajets, soit :

$$h(t) = \sum_{p=0}^{P-1} \alpha_p \delta\left(t - \tau_p\right) \qquad (3)$$

où $\alpha_p$, $\tau_p$, $p = 0,..,P - 1$ sont respectivement les coefficients d'atténuation et les retards des différents trajets. Le trajet en ligne directe (LOS) correspond au retard $\tau_0$ et la distance recherchée entre l'émetteur et le récepteur est donnée par $d = c\tau_0$ où c est la vitesse de propagation de la lumière.

La fonction de transfert du canal de transmission est donnée par :

$$H(f) = \sum_{p=0}^{P-1} \alpha_p e^{-j 2\pi f \tau_p} \qquad (4)$$

Le signal reçu par le nœud récepteur après translation en bande de base peut s'écrire sous la forme :

$$s_{BB}(t) = s_{RX}(t) e^{-j\left(2\pi f_0 t_R(t) + \phi_R\right)} + n_R(t) \qquad (5)$$

où $t_R(t)$ est le temps au niveau du récepteur qui diffère généralement du temps réel $t$ en raison d'un défaut de synchronisation de l'horloge locale, et $n_R$ est un terme de bruit supposé blanc additif gaussien.

Si l'on combine les expressions (1), (2) et (5), le signal reçu en bande de base est en définitive donné par :

$$s_{BB}(t) = \left[ s_0\left(t_T(t)\right) e^{j\left(2\pi f_0 t_T(t) + \phi_T\right)} * h(t) \right] e^{-j\left(2\pi f_0 t_R(t) + \phi_R\right)} + n_R(t) \qquad (6)$$

Chacun des nœuds 1 et 2 peut émettre un signal $s_{TX}(t)$ et recevoir le signal émis par l'autre nœud. Dans la suite, les paramètres d'émission/réception relatifs au nœud 1 seront affectés de l'indice 1 et ceux relatifs au nœud 2 seront affectés de l'indice 2. En outre, sans perte de généralité, nous prendrons conventionnellement pour référence temporelle le temps local du nœud 1, autrement dit :

$$t_{T1}(t) = t_{R1}(t) = t \qquad (7\text{-}1)$$

et

$$t_{T2}(t) = t_{R2}(t) = t + t_0 \qquad (7\text{-}2)$$

où $t_0$ est le décalage temporel entre le nœud 2 et le nœud 1. On suppose également que les nœuds ne présentent pas d'offset de fréquence porteuse et d'offset d'échantillonnage, ou bien que ces offsets ont été estimés et compensés. Avec ces conventions, le signal émis par le nœud 1 et reçu par le nœud 2, s'écrit, après translation en bande de base :

$$s_{BB}^{T1 \to R2}(t) = \left[ s_0(t) e^{j\left(2\pi f_0 t + \phi_{T1}\right)} * h(t) \right] e^{-j\left(2\pi f_0 (t+t_0) + \phi_{R2}\right)} + n_{R2}(t) \qquad (8\text{-}1)$$

et, inversement, le signal émis par le nœud 2 et reçu par le nœud 1 :

$$s_{BB}^{T2 \to R1}(t) = \left[ s_0(t) e^{j\left(2\pi f_0 (t+t_0) + \phi_{T2}\right)} * h(t) \right] e^{-j\left(2\pi f_0 t + \phi_{R1}\right)} + n_{R1}(t) \qquad (8\text{-}2)$$

En représentation fréquentielle, les expressions (8-1) et (8-2) deviennent respectivement, si l'on fait abstraction des termes de bruit :

$$S_{BB}^{T1 \to R2}(f) = S_0(f) H(f + f_0) e^{-j2\pi f_0 t_0} e^{j(\phi_{T1} - \phi_{R2})} \tag{9-1}$$

et

$$S_{BB}^{T2 \to R1}(f) = S_0(f) H(f + f_0) e^{j2\pi f_0 t_0} e^{j(\phi_{T2} - \phi_{R1})} \tag{9-2}$$

La fonction de transfert du canal de transmission, après translation en bande de base est par conséquent, pour une émission du nœud 1 vers le nœud 2, sens pris conventionnellement comme le sens aller :

$$H_{BB}^{T1 \to R2}(f) = H(f + f_0) e^{-j2\pi f_0 t_0} e^{j(\phi_{T1} - \phi_{R2})} \tag{10-1}$$

et, inversement, pour une émission du nœud 2 vers le nœud 1, sens pris conventionnellement comme le sens retour :

$$H_{BB}^{T2 \to R1}(f) = H(f + f_0) e^{j2\pi f_0 t_0} e^{j(\phi_{T2} - \phi_{R1})} \tag{10-2}$$

Ces fonctions de transfert prennent à la fréquence nulle (composante DC en bande de base) les valeurs :

$$H_{BB}^{T1 \to R2}(0) = H(f_0) e^{-j2\pi f_0 t_0} e^{j(\phi_{T1} - \phi_{R2})} = e^{j(\phi_{T1} - \phi_{R2})} \sum_{p=0}^{P-1} \alpha_p e^{-j2\pi f_0 (\tau_p + t_0)} \tag{11-1}$$

$$H_{BB}^{T2 \to R1}(0) = H(f_0) e^{j2\pi f_0 t_0} e^{j(\phi_{T2} - \phi_{R1})} = e^{j(\phi_{T2} - \phi_{R1})} \sum_{p=0}^{P-1} \alpha_p e^{-j2\pi f_0 (\tau_p - t_0)} \tag{11-2}$$

$H_{BB}^{T1 \to R2}(0)$ et $H_{BB}^{T2 \to R1}(0)$ représentent respectivement la valeur complexe prise par la fonction de transfert à la fréquence porteuse $f_0$ du canal de transmission dans le sens aller et dans le sens retour, en absence de synchronisation des nœuds. On les notera dans la suite respectivement $\tilde{H}^A(f_0)$ et $\tilde{H}^R(f_0)$.

Lorsque les nœuds ne sont pas synchronisés ($t_0$ non nul), ce qui est généralement le cas, une transmission dans l'un des deux sens seulement ne permet pas d'estimer la distance séparant les deux nœuds car il n'est pas possible de dissocier $\tau_0$ et $t_0$ dans les expressions (11-1) et (11-2).

Il est néanmoins possible de s'affranchir de l'absence de synchronisation entre les nœuds en effectuant une transmission aller-retour sur le canal, le produit des valeurs des fonctions de transfert à la fréquence porteuse $f_0$ dans les sens aller et retour donnant :

$$\tilde{H}^{AR}(f_0) = \tilde{H}^A(f_0) . \tilde{H}^R(f_0) = H^2(f_0) e^{j[(\phi_{T1} - \phi_{R2}) + (\phi_{T2} - \phi_{R1})]} \tag{12}$$

La transmission dans le sens retour peut ne pas immédiatement succéder à la transmission dans le sens aller. La seule contrainte est ici que l'écart temporel entre les deux instants de transmission aller et retour soit inférieur au temps de cohérence du canal.

Que les nœuds soient synchronisés ou non, la fonction de transfert du canal de transmission, incluant la translation en bande de base, est mesurée pour une pluralité M de fréquences porteuses, de préférence équiréparties sur une bande passante virtuelle de largeur $BW_{virt} = (M - 1) \Delta f$ où $\Delta f$ est l'écart entre fréquences successives. L'émetteur (ou le couple d'émetteurs dans le cas d'une transmission aller-retour) effectue des transmissions aux fréquences

$$f_0^{(m)} = f_{ref} + m\Delta f,$$ $m = 0,...,M -1$ où $f_{ref}$ est une fréquence de référence prédéterminée. On notera conventionnel-

lement $\tilde{H}(m) = \tilde{H}\left(f_0^{(m)}\right)$ la valeur prise par fonction de transfert aller ou retour en absence de synchronisation, c'est-à-dire la composante DC en bande de base exprimée par (11-1) ou (11-2) lorsque la fréquence porteuse prend la valeur $f_0^{(m)} = f_{ref} + m\Delta f$. De même, on notera conventionnellement $\tilde{H}^{AR}(m) = \tilde{H}^{AR}\left(f_m^{(0)}\right)$ la valeur prise par la fonction de transfert aller-retour exprimée par (12) lorsque la fréquence porteuse prend la valeur $f_0^{(m)} = f_{ref} + m\Delta f$.

La Fig. 2 représente un exemple de balayage d'une bande virtuelle au cours du temps par un couple de nœuds d'un réseau LPWA.

Dans cet exemple, le balayage de la bande virtuelle de largeur $BW_{virt}$ est réalisé par sauts de fréquence de valeur $\Delta f$. La largeur de bande instantanée est notée $BW_{sym}$ (typiquement d'une centaine de Hz à une centaine de kHz comme indiqué précédemment). La transmission de chaque paquet dure un temps $T_p$, un temps de garde $T_g$ étant généralement respecté entre une transmission aller et une transmission retour sur le même canal de propagation et un temps $T_s$ étant respecté pour passer d'une fréquence à la suivante. La durée totale du balayage est par conséquent de $T_{MC} = M(2T_p + T_g + T_s)$.

On notera qu'aux fins de combiner de manière cohérente les mesures aux différentes fréquences, la durée $T_{MC}$ sera avantageusement choisie au temps de cohérence du canal.

Le balayage de fréquence porteuse n'est pas nécessairement monotone (croissant ou décroissant) mais peut suivre un ordre quelconque. En tout état de cause, au terme du balayage on dispose, d'une pluralité de valeurs complexes caractéristiques de la fonction de transfert aller-retour du canal de transmission entre les deux nœuds, à une pluralité M de fréquences.

Dans un premier exemple, les valeurs complexes peuvent être données par :
$\tilde{H}^A(m)$ et $\tilde{H}^R(m)$, $m=0,...,M-1$.

De manière originale, ces valeurs complexes seront données par $\tilde{H}^{AR}(m)$, $m=0,...,M-1$.

La résolution sur la mesure de distance est alors de :

$$\Delta r = c\big/2BW_{virt} = c\big/2M\Delta f \qquad\qquad (13)$$

On pourra choisir avantageusement pour M une valeur égale à une puissance de 2 de manière à pouvoir obtenir le cas échéant la réponse impulsionnelle du canal par IFFT.

Alternativement, les valeurs de fréquence porteuse ne seront pas choisies équiréparties mais prenant les valeurs $f_0^{(k_m)} = f_{ref} + k_m\Delta f$ où $k_m$, $m = 0,..,M-1$ sont des entiers quelconques distincts.

De manière originale, les valeurs complexes caractéristiques de la fonction de transfert aller-retour du canal de transmission aux différentes fréquences porteuses sont fournies à un réseau de neurones artificiels (NN). Ces valeurs complexes sont fournies au réseau NN sous la forme de couples de valeurs réelles, par exemple, selon une première variante sous la forme de partie réelle et partie imaginaire ou bien, selon une seconde variante, sous la forme de module et argument.

Sans perte de généralité, nous supposerons dans la suite que les valeurs complexes sont fournies au réseau NN selon la première variante.

Les valeurs $\Re\left(\tilde{H}^A(m)\right)$ et $\Im\left(\tilde{H}^A(m)\right)$, $m = 0,...,M-1$, d'une part, et les valeurs $\Re\left(\tilde{H}^R(m)\right)$ et $\Im\left(\tilde{H}^R(m)\right)$, $m = 0,...,M-1$, d'autre part peuvent être fournies comme valeurs d'entrée à la couche d'entrée. Cette dernière comporte alors 4M neurones.

Toutefois, de manière avantageuse, selon un mode de réalisation de la présente invention, les valeurs $\Re\left(\tilde{H}^{AR}(m)\right)$ et $\Im\left(\tilde{H}^{AR}(m)\right)$, $m = 0,...,M-1$ sont fournies comme valeurs d'entrée. La couche d'entrée ne comporte ainsi que 2M neurones.

Dans tous les cas, la couche d'entrée est suivie de plusieurs couches cachées (réseau neuronal profond) et d'une couche de sortie. La couche de sortie fournit une estimation de la distance séparant les deux nœuds (ou bien de manière équivalente le temps de propagation sur le trajet en ligne directe entre les deux nœuds).

Le réseau de neurones est entraîné de manière supervisée sur un jeu de données d'entrée labellisées, autrement dit sur un ensemble d'entraînement $\left\{\left\{\Re\left(\tilde{H}_i^{AR}(m)\right),\Im\left(\tilde{H}_i^{AR}(m)\right)\right\}_{m=0}^{M-1},d_i\right\}_{i=1}^{N}$ selon le mode de réalisation de l'invention, où $N$ est la taille de l'ensemble d'entraînement et $\left\{\left\{\tilde{H}_i^{AR}(m)\right\}_{m=0}^{M-1}\right\}_{i=1}^{N}$ représentent un jeu de valeurs de la fonction de transfert aller-retour d'un canal de transmission entre deux nœuds d'un système LPWA.

L'ensemble d'entraînement pourra être constitué d'instances de canal simulées ou d'instances de canal mesurées. L'entraînement pourra avoir lieu sous forme groupée (batch) hors ligne, et être complété, le cas échéant, par un entraînement en ligne pour rafraîchir les coefficients synaptiques.

Le réseau de neurones est paramétré par le jeu des coefficients synaptiques pondérant les connexions entrantes des différents neurones. On note $\theta$ ce jeu de coefficients synaptiques et $f^\theta$ la fonction de prédiction réalisée par le réseau de neurones.

Le jeu de coefficients synaptiques est mis à jour durant la phase d'entraînement (ou apprentissage), au moyen de l'algorithme de descente de gradient stochastique (SGD) ou bien un algorithme de descente de gradient par mini-lots (groupes de données de l'ensemble d'entraînement), de manière à minimiser la fonction de perte :

$$L(\theta)=\frac{1}{N}\sum_{i=1}^{N}\left(f^\theta\left(\left\{\tilde{H}_i^{AR}(m)\right\}_{m=0}^{M-1}\right)-d_i\right)^2 \qquad (14)$$

L'homme du métier comprendra que d'autres fonctions de perte pourront être utilisées sans sortir du cadre de la présente invention.

Les neurones des différentes couches, exceptée la dernière couche, utilisent une fonction d'activation pour propager leurs sorties, par exemple des unités de rectification linéaires ou ReLU (Rectifier Linear Unit), une fonction leaky ReLU ou encore une fonction Softplus, de manière connue en soi.

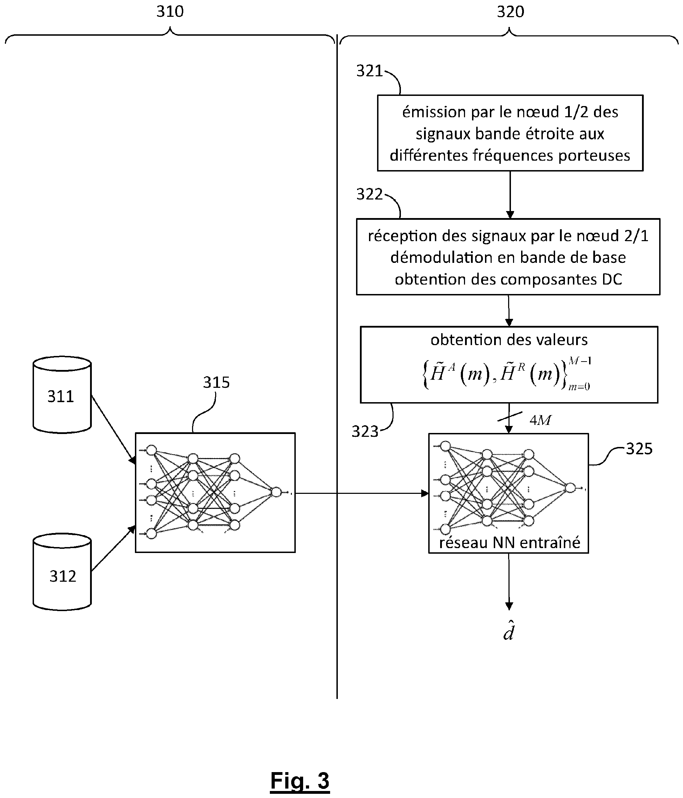

La Fig. 3 représente de manière schématique une méthode de mesure de distance entre nœuds d'un réseau LPWA selon un exemple utile à la compréhension de la présente invention.

Cette méthode comporte une phase d'entraînement, 310 et une phase opérationnelle, 320.

Pendant la phase d'entraînement, le jeu $\theta$ de coefficients synaptiques est mis à jour en 315 à partir de données labellisées, au moyen de l'algorithme du gradient stochastique. Les données labellisées peuvent être issues de résultats de simulation et stockées dans une première base de données 311 et/ou être issues de mesures réelles géoréférencées, stockées dans une seconde base de données 312.

Par résultats de simulation, on entend ici des réalisations d'un modèle de canal.

Quant aux mesures, elles peuvent avoir été effectuées par des objets connectés équipés de modules de réception GNSS et géoréférencées à l'aide de leurs positions GPS respectives.

Alternativement, lorsque ces objets connectés sont mobiles, la détection de leur passage à proximité d'un point de position connue (station de base par exemple) peut également permettre le géoréférencement des mesures.

D'autres cas de géoréférencement de mesures pourront être envisagées sans sortir du cadre de la présente invention. En particulier, lorsqu'un objet connecté suit une trajectoire connue ou prédictible, sa position connue ou prédite pourra permettre de géo-référencer les mesures correspondantes.

Chaque donnée labellisée comprend un vecteur complexe de taille 2$M$, $\left\{\tilde{H}_i^{A}(m),\tilde{H}_i^{R}(m)\right\}_{m=0}^{M-1}$ (c'est-à-dire un vecteur réel de taille 4$M$) représentant les valeurs de la fonction de transfert dans le sens aller et dans le sens retour d'un canal de transmission entre deux nœuds du réseau LPWA, pour les M différentes fréquences porteuses. La donnée labellisée comprendra également l'étiquette correspondante, représentant la distance $d_i$ entre ces nœuds (ou bien le temps de propagation en ligne directe sur ce canal, $d_i/c$).

Pendant la phase opérationnelle, un premier nœud du réseau émet successivement un signal à bande étroite sur une pluralité M de fréquences porteuses, en 321, pendant une pluralité de premiers intervalles de transmission comme exposé précédemment. Selon une variante avantageuse de réalisation, les fréquences porteuses successives sont espacées d'un écart de fréquence constant $\Delta f$. Le signal peut être émis sous forme de paquets successifs de symboles pilotes.

Le second nœud du réseau LPWA reçoit les signaux aux différentes fréquences porteuses et les démodulent en bande de base, en 322. Les valeurs de la fonction de transfert aller aux différentes fréquences, $\tilde{H}^A(m)$, $m = 0,..,M$-1, sont obtenues à partir de l'amplitude complexe des composantes DC en bande de base. Par exemple, cette amplitude complexe pourra être obtenue par moyennage des composantes DC sur un intervalle lorsque celui-ci contient à l'émission une succession de symboles pilotes identiques. Si les symboles pilotes ont été générés par multiplication d'un symbole de référence avec les éléments successifs d'un code orthogonal, les composantes DC en bande de base seront multipliées avec les éléments de ce code avant moyennage.

La même opération est réalisée en intervertissant les rôles des deux nœuds. Plus précisément le second nœud émet successivement un signal à bande étroite sur les différentes fréquences porteuses en 321, le premier nœud les reçoit et les translate en bande de base en 322. On obtient comme précédemment les valeurs de la fonction de transfert retour, $\tilde{H}^R(m)$, $m = 0,..,M$-1 à partir des composantes DC en bande de base, c'est-à-dire à partir des symboles complexes obtenus par démodulation en bande de base.

$$\left\{\tilde{H}^A(m),\tilde{H}^R(m)\right\}_{m=0}^{M-1}$$

Les 2*M* valeurs réelles (4*M* valeurs réelles) sont fournies à la couche d'entrée du réseau de neurones entraîné en 325. Celui-ci calcule une estimation, $\hat{d}$, de la distance entre les deux nœuds. De manière équivalente, elle peut fournir une estimation, $\hat{\tau}_0$, du temps de propagation sur le trajet en ligne directe.

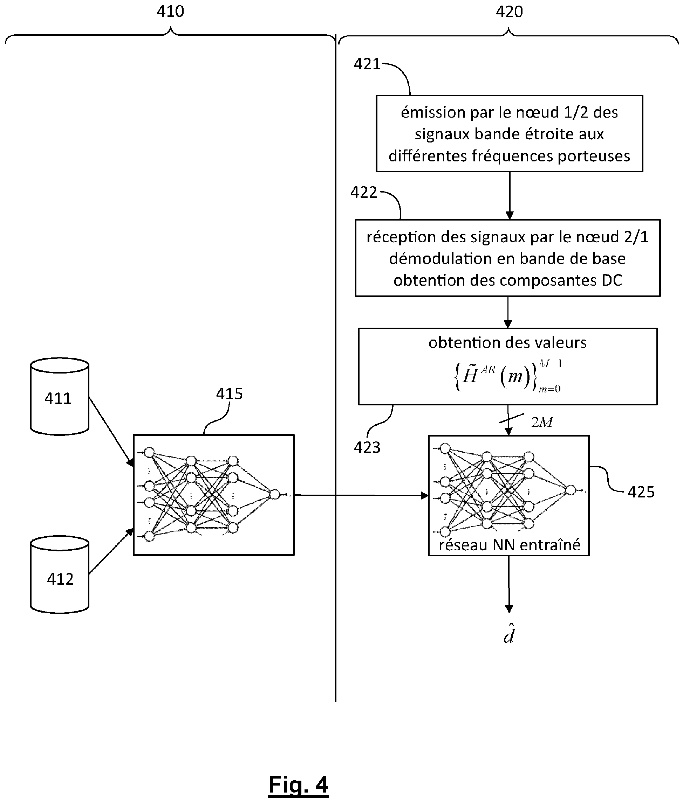

La Fig. 4 représente de manière schématique une méthode de mesure de distance entre nœuds d'un réseau LPWA selon un mode de réalisation de la présente invention.

La méthode de mesure selon ce mode de réalisation comporte une phase d'entraînement, 410, et une phase opérationnelle, 420.

Avantageusement, le réseau de neurones est entraîné sur des valeurs complexes de fonction de transfert allerretour et non sur des couples de valeurs complexes de fonction de transfert aller et de fonction de transfert retour.

Plus précisément, chaque donnée labellisée comprendra un vecteur complexe de taille *M*, $\left\{\tilde{H}_i^{AR}(m)\right\}_{m=0}^{M-1}$ (vecteur réel de taille 2*M*) représentant les valeurs de la fonction de transfert aller-retour d'un canal de transmission entre deux nœuds du réseau LPWA, ce pour les *M* différentes fréquences porteuses.

Pendant la phase d'entraînement, le jeu $\theta$ de coefficients synaptiques est mis à jour en 415 à partir de données labellisées, au moyen de l'algorithme du gradient stochastique. Comme précédemment, les données labellisées peuvent être issues de résultats de simulation et stockées dans une première base de données 411 et/ou être issues de mesures réelles géoréférencées, stockées dans une seconde base de données 412.

La phase opérationnelle 420 comprend une étape d'émission de signaux à bande étroite par le nœud 1 (resp. 2), 421, ainsi qu'une étape de réception et démodulation en bande de base, 422, de ces signaux par le nœud 2 (resp. 1), 422. Les étapes 421 et 422 sont respectivement identiques aux étapes 321 et 332 de la Fig. 3.

A la différence de la Fig. 3, l'étape 423 comprend en sus le calcul du produit des fonctions de transfert aller et retour aux différentes fréquences porteuses, autrement dit des valeurs complexes $\tilde{H}^{AR}(m) = \tilde{H}^A(m).\tilde{H}^R(m)$, $m = 0,..,M$-1.

Ce calcul peut être effectué par l'un des nœuds, typiquement une station de base, ou bien par un serveur distant.

$$\left\{\tilde{H}^{AR}(m)\right\}_{m=0}^{M-1}$$

Les *M* valeurs complexes (2*M* valeurs réelles) sont fournies à la couche d'entrée du réseau de neurones entraîné en 425. Celui-ci calcule une estimation, $\hat{d}$, de la distance entre les deux nœuds. De manière équivalente, elle peut fournir une estimation, $\hat{\tau}_0$, du temps de propagation sur le trajet en ligne directe.

Le mode de réalisation permet est plus compact celui de la Fig. 3 avec deux fois moins de neurones dans la couche d'entrée. En contrepartie, il nécessite un calcul préalable du produit des fonctions de transfert aller et des fonctions de transfert retour aux différentes fréquences porteuses.

La méthode d'estimation de distance selon l'invention permet de fournir avec une bonne résolution spatiale (resp. temporelle) la distance (resp. le temps de propagation en ligne directe) entre les deux nœuds. Le réseau de neurones permet d'extraire cette information présente de manière inhérente dans les mesures, sans avoir à construire un modèle paramétrique complexe.

Il convient de noter aussi que le réseau peut continuer à apprendre en ligne de manière supervisée, après la phase préalable d'apprentissage. Par exemple, si on effectue une mesure de la fonction de transfert aller-retour entre deux nœuds géoréférencés, la donnée labellisée correspondante peut servir à mettre à jour les paramètres du réseau de neurones.

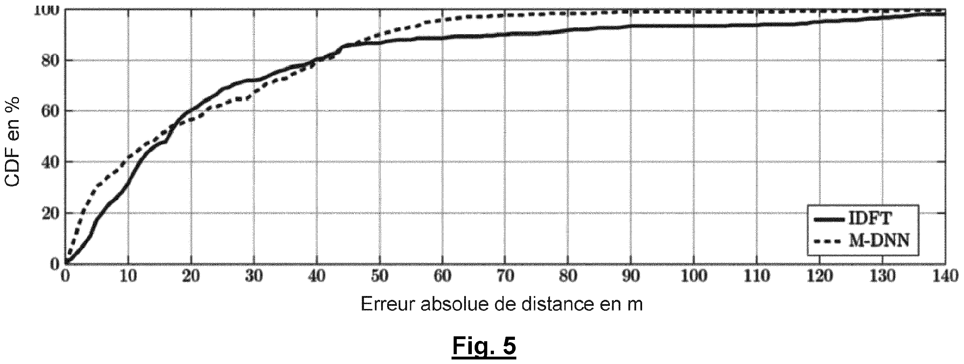

La Fig. 5 illustre les performances d'une méthode d'estimation de distance selon l'invention et d'une méthode d'estimation de distance connue de l'état de la technique. Plus précisément, la Fig. 5 donne la fonction de répartition de l'erreur de distance lors d'une campagne de mesures, en utilisant une méthode d'estimation de distance selon l'état de la technique (désignée par IDFT) et une méthode d'estimation selon mode de réalisation de la présente invention de la Fig. 4 (désignée par M-DNN pour *Mixed-data Deep Neural Network* dans la mesure où l'entraînement a été conduit à la fois sur des données synthétiques et réelles).

La méthode IDFT a consisté à effectuer une IDFT (*Inverse Discrete Fourier Transform*) des valeurs des fonctions de transfert aller pour obtenir la réponse impulsionnelle du canal de transmission dans le domaine temporel, puis à sélectionner le premier trajet pour déterminer le temps de propagation sur le trajet direct et en déduire la distance entre les nœuds.

La méthode M-DNN selon le mode de réalisation de la présente invention a utilisé un réseau de neurones entraîné sur une base de données générée par simulation Monte-Carlo sur des canaux de transmission ayant les caractéristiques données dans le Tableau 1 ci-dessous.

Tableau 1

| Parameter | Symbol | Value |
|---|---|---|
| Path amplitude ratio | $\beta = \alpha_1/\alpha_0$ | - 30 : 5 : - 5, - 3, -1, 0, 1, 3, 5, 10 dB |
| Path delay difference | $\Delta \tau = \tau_1 - \tau_0$ | 0 : 10 : 200 m |
| Signal-to-noise ratio | $E_x/N_o$ | -30 : 5 : 50 dB |
| Monte Carlo runs | | 1500 |

Les canaux de transmission sont supposés comprendre un trajet en ligne directe (avec un coefficient d'atténuation $\alpha_0$ et un temps de propagation $\tau_0$) ainsi qu'un trajet indirect (avec un coefficient d'atténuation $\alpha_1$ et un temps de propagation $\tau_1$). Le rapport signal sur bruit à la réception a été noté par $E_s/N_0$. Le nombre de simulations pour chaque combinaison des valeurs de paramètres de la table I était de 1500.

Le nombre $M$ de fréquences porteuses était de 16, avec un écart de fréquence $\Delta f$ de 200 kHz correspondant à une largeur de bande virtuelle $(M-1)\Delta f$ de 3MHz. La largeur de bande des signaux transmis aux différentes porteuses était de 10 kHz.

Le réseau de neurones comportait 3 couches cachées, chacune comprenant 128 neurones. Les neurones des différentes couches (exceptée la couche de sortie) utilisaient la fonction ReLU comme fonction d'activation. L'apprentissage du réseau a été réalisé au moyen d'un algorithme de descente de gradient par mini-lots de 32 échantillons de données, et le taux d'apprentissage était de $\alpha = 10^{-3}$.

La figure montre que 90% des erreurs d'estimation commises par la méthode d'estimation de distance M-DNN sont inférieures à 45m alors que 90% des erreurs d'estimation commises par la méthode d'estimation IDFT ne sont inférieures qu'à 60m.

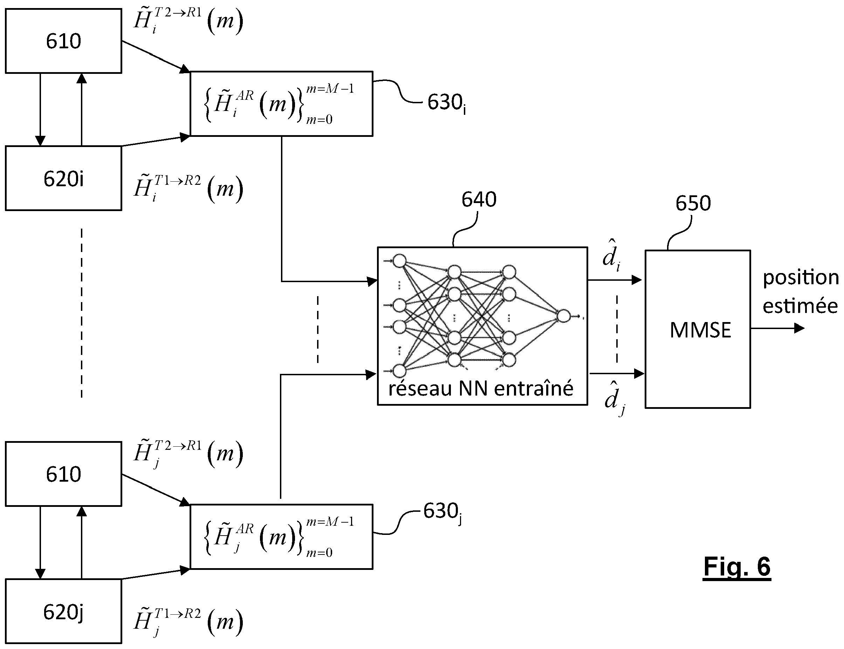

La Fig. 6 représente de manière schématique une première méthode d'estimation de la position d'un nœud de réseau LPWA utilisant une méthode d'estimation de distance selon la présente invention.

La méthode d'estimation de la position d'un nœud illustrée en Fig. 6 utilise une méthode d'estimation de distance selon le mode de réalisation de l'invention de la Fig. 4.

La méthode d'estimation de la position du nœud fait appel à un certain nombre $N$ ($N \geq 3$ dans un plan) de nœuds-ancres c'est-à-dire de nœuds du réseau dont la position est connue ou a été précédemment déterminée.

Le nœud dont la position est à déterminer, 610, émet un signal à bande étroite successivement sur la pluralité $M$ de fréquences porteuses. Le signal émis est reçu par la pluralité de nœuds-ancres et démodulé en bande de base, pour estimer les valeurs de la fonction de transfert aller du canal de transmission avec chaque nœud-ancre, aux fréquences en question.

Réciproquement, les nœuds-ancres (seuls deux nœuds-ancres quelconques $620_i$ et $620_j$ ont été représentés) émettent chacun un signal à bande étroite sur ladite pluralité M de fréquences porteuses. Les nœuds-ancres peuvent émettre à tour de rôle ou bien simultanément avec des codes orthogonaux distincts. Le nœud dont la position est à déterminer effectue une démodulation en bande de base de chacun de ces signaux et détermine les valeurs des fonctions de transfert retour du canal aux différentes fréquences.

Les valeurs des fonctions de transfert aller sont multipliées (en $630_i$ et $630_j$) avec les valeurs des fonctions de transfert retour correspondantes, aux mêmes fréquences porteuses, pour obtenir les valeurs complexes représentatives des fonctions de transfert aller-retour, $\tilde{H}_i^{AR}(m)$, $m = 0,...,M\text{-}1$, de tous les canaux de transmission entre le nœud, 610, et les nœuds-ancres à sa portée.

Les composantes valeurs complexes représentatives des fonctions de transfert aller-retour sont ensuite transmises sous forme de vecteurs (de taille 2$M$) à un réseau de neurones préalablement entraîné, 640, comme décrit en relation avec la Fig. 4. Le réseau de neurones détermine alors les distances séparant le nœud 610 des différents nœuds-ancres.

Les vecteurs en question peuvent être multiplexés séquentiellement à l'entrée du réseau de neurones et les distances estimées sont alors démultiplexées en sortie du réseau.

Alternativement, on pourra prévoir un réseau de neurones de taille *2N.M* opérant conjointement sur l'ensemble des vecteurs et fournissant une estimation des *N* distances en parallèle.

Alternativement encore, chacun des nœuds-ancres (par exemple les stations de base) peut héberger un réseau de neurones préalablement entraîné. Ce nœud ancre calcule alors les valeurs complexes représentatives de la fonction de transfert aller-retour entre le nœud d'intérêt 610 et lui-même.

Quelle que soit la variante envisagée, les distances ainsi estimées par le (ou les) réseau(x) de neurones sont fournies à un module de prédiction de position, 650, estimant la position **p** du nœud d'intérêt au moyen d'un algorithme MMSE (*Minimum Mean-Square Error*). Plus précisément la position du nœud d'intérêt est estimée en minimisant la fonction de coût :

$$F(\mathbf{p}) = \sum_{i=1}^{N} \left( \left\| \mathbf{p} - \mathbf{p}_i \right\| - \hat{d}_i \right)^2 \qquad (15)$$

Autrement dit :

$$\hat{\mathbf{p}} = \arg\min_{\mathbf{p}} \left( F(\mathbf{p}) \right) \qquad (16)$$

Alternativement, l'estimation de position peut être intégrée au sein du réseau de neurones lui-même sous forme de couche de sortie, celle-ci utilisant alors une fonction d'activation linéaire. Pour accélérer l'entraînement du réseau de neurones, on pourra le scinder en deux blocs successifs (apprentissage par transfert), le premier étant entraîné à l'estimation de distance comme décrit en relation avec les Figs. 3 et 4, le second étant entraîné à l'estimation de position à partir des distances aux nœuds ancres. Autrement dit le premier bloc de couches est simplement destiné à l'estimation de distance et le second bloc destiné à estimer la position à partir des distances préalablement estimées.

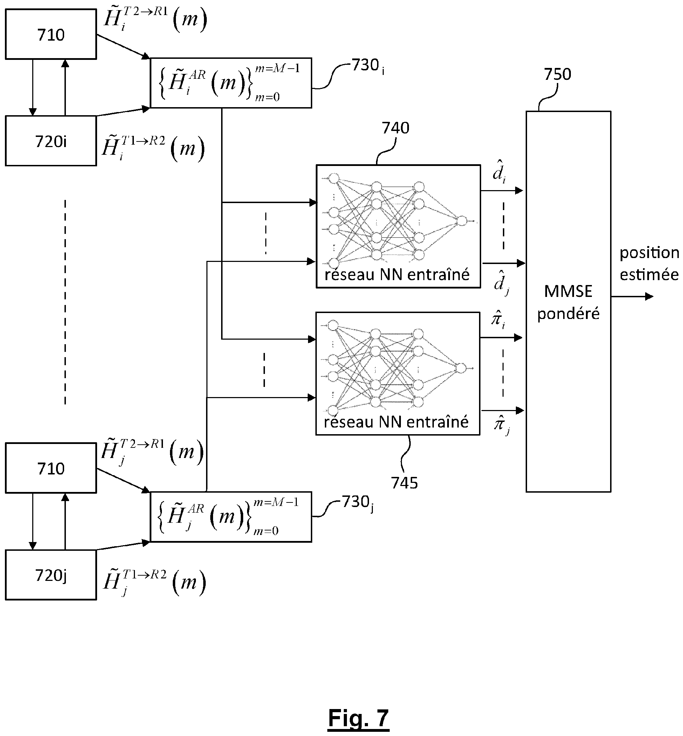

La Fig. 7 représente de manière schématique une seconde méthode d'estimation de la position d'un nœud de réseau LPWA utilisant une méthode d'estimation de distance selon la présente invention.

La méthode d'estimation de la position d'un nœud illustrée en Fig. 7 utilise à nouveau une méthode d'estimation de distance selon le mode de réalisation de l'invention de la Fig. 4.

Les éléments désignés par les références 710, 720$_{i/j}$, 730$_{i/j}$, 740 sont respectivement identiques aux éléments 610, 620$_{i/j}$, 630$_{i/j}$, 640 et leur description ne sera donc pas reprise ici.

Si l'on considère le canal de transmission entre le nœud d'intérêt 710 et le nœud-ancre 720$_i$, les valeurs des fonctions de transfert aller sont multipliées en 730$_i$ avec les valeurs des fonctions de transfert retour correspondantes, aux mêmes fréquences porteuses, pour donner un *M*-uplet de valeurs complexes, ou de manière équivalente un vecteur réel de taille *2M*, représentatif de la fonction de transfert aller-retour du canal de transmission entre le nœud d'intérêt et le nœud-ancre 720$_i$.

Les *N* vecteurs représentatifs des différents canaux de transmission sont fournis, d'une part, à un premier réseau de neurones artificiels 740, identique au réseau de neurones artificiels 640 et, d'autre part, à un second réseau de neurones artificiels 745.

Le premier réseau de neurones fournit une estimation des distances entre le point d'intérêt et les nœuds ancres. Les mêmes variantes que celles décrites en relation avec la Fig. 6 s'appliquent ici.

Le second réseau de neurones 745, effectue une classification de chaque canal de du *M*-uplet de valeurs complexes représentant la fonction de transfert aller-retour de ce canal. Plus précisément, le second réseau de neurones est configuré pour fournir des facteurs de qualité $\hat{\pi}_i$, $i = 1,..,N$. Le facteur de qualité $\hat{\pi}_i$ est défini comme un score d'appartenance à la catégorie LOS ou NLOS, autrement dit la probabilité que canal de transmission entre les nœuds 710 et 720$_i$ appartienne à l'une ou l'autre catégorie. Le réseau de neurones est préalablement entraîné sur les valeurs complexes représentatives des fonctions de transfert aller-retour, c'est-à-dire sur des M-uplets $\left\{ \tilde{H}^{AR}(m) \right\}_{m=0}^{m=M-1}$ obtenus par mesure et/ou par simulation, chaque M-uplet étant labellisé par le type LOS/NLOS du canal de transmission en question. Par simulation, on entend ici le tirage de paramètres d'un modèle prédéterminé de canal de transmission.

Les facteurs de qualité $\overset{\wedge}{\pi}_i$, $i = 1,..,N$, sont fournis, avec les estimations de distance correspondantes, $\overset{\wedge}{d}_i$, au module d'estimation de position 750. Ce module d'estimation cherche à minimiser une fonction de coût, pondérant l'écart à distance estimée avec le facteur de qualité de l'estimation correspondante :

$$F_\pi(\mathbf{p}) = \sum_{i=1}^{N} \hat{\pi}_i \left( \left\| \mathbf{p} - \mathbf{p}_i \right\| - \hat{d}_i \right)^2 \qquad (17)$$

où p est un vecteur définissant la position du nœud 710 dans un repère donné et $\mathbf{p}_i$, $i = 1,..,N$ sont des vecteurs définissant les positions respectives (connues) des nœuds-ancres 720$_i$ dans le même repère, et $N$ est le nombre de nœuds-ancres considérés.

La position estimée est alors celle minimisant la fonction de coût :

$$\hat{\mathbf{p}} = \arg\min_{\mathbf{p}} \left( F_\pi(\mathbf{p}) \right) \qquad (18)$$

Différentes variantes pourront être envisagées par l'homme du métier sans sortir du cadre de l'invention. En particulier, au lieu de multiplexer les vecteurs représentatifs des fonctions de transfert aller-retour à l'entrée des réseaux de neurones 740 et 745, on pourra prévoir des réseaux de neurones 740$_i$ et 745$_i$ associés à chaque canal de transmission.

Le cas échéant les réseaux de neurones 740 et 745 (ou bien 740$_i$ et 745$_i$) pourront être fusionnés pour être remplacer par des réseaux de neurones à 2 sorties, une première sortie donnant une estimation de la distance et une seconde sortie donnant le facteur de qualité.

En tout état de cause, l'estimation de position donnée par les expressions (17) et (18) permet d'obtenir généralement une estimation plus juste que celle donnée par les expressions (15) et (16).

## Revendications

1. Méthode d'estimation de distance entre un premier nœud et un second nœud d'un réseau LPWA, le premier nœud, respectivement le second nœud, émettant successivement des signaux à bande étroite sur une pluralité $M$ de fréquences porteuses (421) et le second nœud, respectivement le premier nœud, démodulant les signaux reçus en bande de base, **caractérisée en ce que** :

   - une pluralité de valeurs complexes représentatives de la fonction de transfert aller-retour du canal de transmission entre le premier et le second nœuds, aux différentes fréquences porteuses, sont déterminées (423) à partir des signaux reçus par le second nœud, respectivement le premier nœud, après démodulation en bande de base, lesdites valeurs complexes, $\tilde{H}^{AR}(m)$, $m = 0,..,M\text{-}1$ , représentatives de la fonction de transfert aller-retour du canal de transmission étant obtenues en effectuant le produit des valeurs complexes, $\tilde{H}^A(m)$, $m=0,..,M\text{-}1$ de la fonction de transfert aller du canal de transmission, auxdites fréquences porteuses, avec les valeurs complexes respectives, $\tilde{H}^R(m)$, $m = 0,..,M\text{-}1$ de la fonction de transfert retour du canal de transmission, à ces mêmes fréquences porteuses ;
   - lesdites valeurs complexes représentatives de la fonction de transfert aller-retour sont fournies à un réseau de neurones artificiels préalablement entraîné de manière supervisée, ledit réseau de neurones donnant (425) une estimation de la distance séparant le premier nœud et le second nœud.

2. Méthode d'estimation de distance selon la revendication 1, **caractérisée en ce que** les fréquences porteuses sont choisies de manière équirépartie sur une bande virtuelle de largeur $(M\text{-}1)\Delta f$ où $\Delta f$ est l'écart entre deux fréquences porteuses consécutives.

3. Méthode d'estimation de distance selon la revendication 1 ou 2, **caractérisée** en que le réseau de neurones possède une couche d'entrée à 2$M$ neurones recevant, d'une part, les M parties réelles $\left( \Re\left( \tilde{H}_i^{AR}(m) \right) \right)$, $m = 0,..,M\text{-}1$) et, d'autre part, *les M parties imaginaires* $\left( \Im\left( \tilde{H}_i^{AR}(m) \right) \right)$, $m = 0,..,M\text{-}1$) des valeurs complexes représentatives de la fonction de transfert aller-retour.

4. Méthode d'estimation de distance selon la revendication 3, **caractérisée en ce qu'**elle comprend une phase d'entraînement supervisée (410) dans laquelle le réseau de neurones est entraîné à l'aide d'un ensemble de données labellisées, chaque donnée labellisée comprenant un vecteur complexe représentant les valeurs de la fonction de transfert aller-retour entre deux nœuds d'un réseau LPWA, pour les $M$ différentes fréquences porteuses, et comme étiquette, la distance correspondante entre ces deux nœuds.

5. Méthode d'estimation de distance selon la revendication 4, **caractérisée en ce que** les données labellisées sont obtenues à partir de canaux de propagation simulés (411) et/ou de canaux de propagation mesurés, réels, entre nœuds géoréférencés (412).

6. Méthode d'estimation de distance selon l'une des revendications précédentes, **caractérisée en ce que** l'émission successive et la réception des signaux à bande étroite sur le canal de transmission sur ladite pluralité $M$ de fréquences porteuses, du premier nœud vers le second nœud et du second nœud vers le premier nœud, est réalisée sur une durée totale ($T_{MC}$) inférieure au temps de cohérence du canal de transmission.

7. Méthode d'estimation de position d'un nœud d'intérêt dans un réseau LPWA comprenant une pluralité $N$ de nœuds-ancres dont les positions sont connues, **caractérisée en ce que** l'on estime la distance entre le nœud d'intérêt et chacun des nœuds-ancres au moyen de la méthode d'estimation de distance selon l'une des revendications précédentes, la position du nœud d'intérêt étant obtenue en minimisant (660) une fonction de coût

$$F(\mathbf{p}) = \sum_{i=1}^{N} \left( \left\| \mathbf{p} - \mathbf{p}_i \right\| - \hat{d}_i \right)^2$$

où $\tilde{d}_i$, $i = 1,..,N$ sont les distances estimées entre le nœud d'intérêt par le réseau de neurones (640) et les nœuds ancres, $\mathbf{p}_i$, $i = 1,..,N$, sont des vecteurs représentant les positions respectives des nœuds ancres et $\mathbf{p}$ est un vecteur représentant la position du nœud d'intérêt.

8. Méthode d'estimation de la position d'un nœud d'intérêt dans un réseau LPWA comprenant une pluralité $N$ de nœuds-ancres dont les positions sont connues, **caractérisée en ce que** l'on estime la distance entre le nœud d'intérêt et chacun des nœuds-ancres au moyen de la méthode d'estimation de distance selon l'une des revendications 1 à 6, la position du nœud d'intérêt étant obtenue en minimisant (750) une fonction de coût

$$F_{\pi}(\mathbf{p}) = \sum_{i=1}^{N} \hat{\pi}_i \left( \left\| \mathbf{p} - \mathbf{p}_i \right\| - \hat{d}_i \right)^2$$

où $\hat{d}_i$, $i = 1,..,N$ sont les distances estimées entre le nœud d'intérêt et les nœuds ancres par le réseau de neurones (740), $\mathbf{p}_i$, $i = 1,..,N$ sont des vecteurs représentant les positions respectives des nœuds ancres, $\mathbf{p}$ est un vecteur représentant la position du nœud d'intérêt, $\hat{\pi}_i$, $i = 1,..,N$ sont des facteurs de qualité indicatifs de la catégorie LOS/NLOS des canaux de transmission entre le nœud d'intérêt et les nœuds-ancres, le facteur de qualité relatif à un canal de transmission entre le nœud d'intérêt et un nœud ancre étant fourni par un second réseau de neurones artificiels (745) recevant en entrée les parties réelles et imaginaires des valeurs complexes représentatives de la fonction de transfert aller-retour

$$\phi_R^{[T_1]}, \phi_R^{[R_1]}$$

$$\phi_R^{[T_2]}, \phi_R^{[R_2]}$$

## Fig. 1

$M$ valeurs de la fonction de transfert aller-retour

## Fig. 2

310

320

321

émission par le nœud 1/2 des signaux bande étroite aux différentes fréquences porteuses

322

réception des signaux par le nœud 2/1 démodulation en bande de base obtention des composantes DC

obtention des valeurs

$$\left\{ \tilde{H}^{A}\left(m\right), \tilde{H}^{R}\left(m\right) \right\}_{m=0}^{M-1}$$

$4M$

311

315

312

323

325

réseau NN entraîné

$\hat{d}$

**Fig. 3**

410

420

421

émission par le nœud 1/2 des signaux bande étroite aux différentes fréquences porteuses

422

réception des signaux par le nœud 2/1 démodulation en bande de base obtention des composantes DC

obtention des valeurs

$$\left\{ \tilde{H}^{AR}\left(m\right) \right\}_{m=0}^{M-1}$$

423

411

415

412

2M

réseau NN entraîné

425

$\hat{d}$

**Fig. 4**

**Fig. 5**

$\tilde{H}_i^{T2 \rightarrow R1}(m)$

610

$\left\{ \tilde{H}_i^{AR}(m) \right\}_{m=0}^{m=M-1}$ — 630$_i$

620i    $\tilde{H}_i^{T1 \rightarrow R2}(m)$

640

650

$\hat{d}_i$

MMSE

position estimée

réseau NN entraîné

$\hat{d}_j$

$\tilde{H}_j^{T2 \rightarrow R1}(m)$

610

$\left\{ \tilde{H}_j^{AR}(m) \right\}_{m=0}^{m=M-1}$ — 630$_j$

620j    $\tilde{H}_j^{T1 \rightarrow R2}(m)$

**Fig. 6**

$\tilde{H}_i^{T2 \to R1}(m)$

710

$\{\tilde{H}_i^{AR}(m)\}_{m=0}^{m=M-1}$ 730$_i$

720i $\tilde{H}_i^{T1 \to R2}(m)$

740

750

réseau NN entraîné $\hat{d}_i$

$\hat{d}_j$

$\hat{\pi}_i$

réseau NN entraîné $\hat{\pi}_j$

745

MMSE pondéré

position estimée

$\tilde{H}_j^{T2 \to R1}(m)$

710

$\{\tilde{H}_j^{AR}(m)\}_{m=0}^{m=M-1}$ 730$_j$

720j $\tilde{H}_j^{T1 \to R2}(m)$

**Fig. 7**

18

**EP 3 792 652 A1**

Europäisches
Patentamt

European
Patent Office

Office européen
des brevets

# RAPPORT DE RECHERCHE EUROPEENNE

Numéro de la demande

EP 20 19 5598

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WOLF FLORIAN ET AL: "Coherent Multi-Channel Ranging for Narrowband LPWAN: Simulation and Experimentation Results", 2018 15TH WORKSHOP ON POSITIONING, NAVIGATION AND COMMUNICATIONS (WPNC), IEEE, 25 octobre 2018 (2018-10-25), pages 1-6, XP033460376, DOI: 10.1109/WPNC.2018.8555746 * figures 1-3 * * sections: I. Introduction II. Coherent Multi-Channel Ranging V.Conclusion * ----- | 1-8 | INV. G01S5/02 G01S5/14 G01S13/87 G01S13/84 |
| A | BREGAR KLEMEN ET AL: "Improving Indoor Localization Using Convolutional Neural Networks on Computationally Restricted Devices", IEEE ACCESS, vol. 6, 21 mars 2018 (2018-03-21), pages 17429-17441, XP011681588, DOI: 10.1109/ACCESS.2018.2817800 * figure 5 * * sections: I. Introduction II. Related Work IV.Measurements V. Node Localization VI.NLOS Classification and Ranging Error Estimation using CNN * ----- -/-- | 1,3,6-8 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 12 janvier 2021 | Tancredi, Urbano |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 20 19 5598

| | DOCUMENTS CONSIDERES COMME PERTINENTS | | | |
|---|---|---|---|---|
| Catégorie | Citation du document avec indication, en cas de besoin, des parties pertinentes | Revendication concernée | | CLASSEMENT DE LA DEMANDE (IPC) |
| A | KOBUS VAN DER MERWE ET AL: "RF-Echo : A Non-Line-of-Sight Indoor Localization System Using a Low-Power Active RF Reflector ASIC Tag", PROCEEDINGS OF THE 23RD ANNUAL INTERNATIONAL CONFERENCE ON MOBILE COMPUTING AND NETWORKING , MOBICOM '17, 4 octobre 2017 (2017-10-04), pages 222-234, XP055694379, New York, New York, USA DOI: 10.1145/3117811.3117840 ISBN: 978-1-4503-4916-1 * figures 2, 4, 5 * * sections: 1. Introduction 2. Background 3. Proposed System: RF-Echo * ----- | 1,3,7 | | |
| | | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 12 janvier 2021 | Tancredi, Urbano |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 2 de 2

## RÉFÉRENCES CITÉES DANS LA DESCRIPTION

**Littérature non-brevet citée dans la description**

- **M. PICHLER et al.** Multi-channel distance measurement with IEEE 802.15.4 (ZigBee) devices. *IEEE Journal of Selected Topics in Signal Processing,* Octobre 2009, vol. 3 (5), 845-859
- **O. BIALER et al.** A deep neural network approach for time-of-arrival estimation in multipath channels. *Proc. of ICASSP Conference,* Avril 2018, 2936-2940

- **F. WOLF et al.** Coherent multi-channel ranging for narrowband LPWAN : simulation and expérimentation results. *Proc. 2018 15th IEEE Workshop on positioning, navigation and communication,* 25 Octobre 2018